# EUROPEAN PATENT SPECIFICATION

(11) **EP 3 889 343 B1**
(45) Date of publication and mention of the grant of the patent: **01.03.2023**
(21) Application number: 21165871.1
(22) Date of filing: 30.03.2021
(51) Int. Cl.: D06F 58/48, D06F 25/00, D06F 29/00, D06F 39/04, D06F 58/20, D06F 103/44

(54) **LAUNDRY TREATING APPARATUS AND CONTROL METHOD FOR THE SAME**
WÄSCHEBEHANDLUNGSVORRICHTUNG UND STEUERUNGSVERFAHREN DAFÜR
APPAREIL DE TRAITEMENT DU LINGE ET SON PROCÉDÉ DE COMMANDE

(30) Priority: 31.03.2020 KR 20200039377
(43) Date of publication of application: 06.10.2021
(73) Proprietor: LG Electronics Inc., Seoul 07336 (KR)
(72) Inventor: CHOI, Hongki, 08592 Seoul (KR); HWANG, Jeongwon, 08592 Seoul (KR)
(74) Representative: Vossius & Partner Patentanwälte Rechtsanwälte mbB

(56) References cited:
- WO-A1-2011/057955
- WO-A1-2015/139472

## Description

This application claims the benefit of the Korean Patent Application No. 10-2020-0039377, filed on March 31, 2020.

### BACKGROUND OF THE INVENTION

### Field of the Invention

The present disclosure relates to a laundry treating apparatus and a control method for the same.

### Discussion of the Related Art

A laundry treating apparatus collectively refers to a laundry washing apparatus, a laundry drying apparatus, and a laundry washing and drying apparatus.

A laundry treating apparatus of the related art is provided to include a dryer for drying laundry, and a washing machine located on an upper surface of the dryer or provided to support a bottom surface of the dryer and then wash laundry. The laundry treating apparatus in which the dryer and the washing machine are stacked up and down has an advantage in that a user may easily move washed laundry from the washing machine to the dryer.

A laundry treating apparatus comprising a washing machine provided with a tub providing a space, in which water is stored, inside a first cabinet, a washing drum provided inside the tub, providing a space in which laundry is stored, a washing drum motor rotating the washing drum, a water supply unit supplying water to the tub, and a heating unit heating water inside the tub; and a dryer provided with a second cabinet supporting a bottom surface of the first cabinet or seated on an upper surface of the first cabinet, a drying drum rotatably provided inside the second cabinet, storing laundry therein, a duct supplying the air to the drying drum, and a heat exchanger provided in the duct, is disclosed in WO 2015/139472.

However, in the aforementioned laundry treating apparatus of the related art, since a controller provided in the dryer and a controller provided in the washing machine operate by their respective circuits independent from each other, a problem occurs in that one apparatus fails to control another apparatus. Therefore, when the operation of any one of the washing machine and the dryer is completed, a problem occurs in that a user should directly perform a process of supplying a power to the other one and a process of inputting a control command.

Also, in the aforementioned laundry treating apparatus, when the dryer and the washing machine may operate at the same, a risk may occur in that an overcurrent may be supplied to a space where the laundry treating apparatus is provided. However, the laundry treating apparatus of the related art has no means for preventing the overcurrent from entering the space where the laundry treating apparatus is provided.

### SUMMARY OF THE INVENTION

Accordingly, the present disclosure is directed to a laundry treating apparatus and a control method for the same, which substantially obviate one or more problems due to limitations and disadvantages of the related art.

An object of the present disclosure is to provide a laundry treating apparatus and a control method for the same, in which consumption of a standby power may be minimized.

Another object of the present disclosure is to provide a laundry treating apparatus and a control method for the same, in which one of two treating apparatuses capable of washing and drying laundry may control the other one.

Other object of the present disclosure is to provide a laundry treating apparatus and a control method for the same, in which an overcurrent may be prevented from being supplied.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

To achieve these objects and other advantages and in accordance with the purpose of the disclosure, as embodied and broadly described herein, the present disclosure provides a control method for a laundry treating apparatus comprising a water supply step of supplying water to a tub by controlling a water supply unit of a washing machine; a drying step of supplying the heated air to a drying drum through a heat exchanger of a dryer; a request step of transmitting a control signal requesting reduction of a current amount per hour supplied to the heat exchanger to the dryer by the washing machine; a low power mode execution step of lowering the current amount per hour supplied to the heat exchanger if a temperature of the air discharged from the drying drum or a temperature of a refrigerant heat-exchanged with the air by the heat exchanger is higher than a preset first reference temperature; a heating step of heating the water stored in the tub by operating the heating unit after the low power mode execution step is initiated; and a particle removal step of separating particles from laundry by rotating a washing drum provided inside the tub.

In another aspect of the present disclosure, in a control method for a laundry treating apparatus comprising a washing machine provided with a tub providing a space, in which water is stored, inside a first cabinet, a washing drum provided inside the tub, providing a space in which laundry is stored, a washing drum motor rotating the washing drum, a water supply unit supplying water to the tub, and a heating unit heating water inside the tub; and a dryer provided with a second cabinet supporting a bottom surface of the first cabinet or seated on an upper surface of the first cabinet, a drying drum rotatably provided inside the second cabinet, storing laundry therein, a duct supplying the air to the drying drum, and a heat exchanger provided in the duct, heating the air, the control method comprises a water supply step of supplying water to the tub by controlling the water supply unit; a drying step of supplying the heated air to the drying drum through the heat exchanger; a request step of transmitting a control signal requesting reduction of a current amount per hour supplied to the heat exchanger to the dryer by the washing machine; a low power mode execution step of lowering the current amount per hour supplied to the heat exchanger if a temperature of the air discharged from the drying drum or a temperature of a refrigerant heat-exchanged with the air by the heat exchanger is higher than a preset first reference temperature; a heating step of heating the water stored in the tub by operating the heating unit after the low power mode execution step is initiated; and a particle removal step of separating particles from laundry by rotating the washing drum.

The control method may execute a maintenance step of maintaining the current amount per hour supplied to the heat exchanger if the temperature of the air discharged from the drying drum or the temperature of the refrigerant is the first reference temperature or less.

The control method may further comprise an adjustment step of reducing a current amount per hour supplied to the washing drum motor in the middle of the maintenance step.

The control method may further comprise a delay notification step of notifying a user of increase of a washing time through a washing machine interface if the adjustment step is initiated.

The control method may further comprise a notification step of notifying the washing machine of initiation of the low power mode execution step by the dryer, wherein the heating step may be initiated after the notification step is completed.

The duct may include a supply duct guiding the air to the drying duct and an exhaust duct guiding the air of the drying drum to the outside of the second cabinet, and the heat exchanger may be provided to include first and second heaters heating the air entering the supply duct, and the low power mode execution step may be provided to supply a current to only one of the first and second heaters.

The control method may further comprise a heating ending notification step of notifying the heater of ending of the heating step by the washing machine, and may supply a current to each of the first and second heaters if ending of the heating step is notified.

The control method may further comprise a drainage step of draining the water of the tub after the particle removal step ends; a dehydrating step of removing water from laundry by rotating the washing drum after the drainage step ends; and a washing standby mode step of supplying a power to a washing machine second controller controlling the washing machine interface without supplying the power to the water supply unit, the washing drum motor, the heating unit, a washing machine first controller and the washing machine interface if the dehydrating step ends.

The control method may execute a drying standby mode step of supplying a power to a dryer second controller controlling a dryer interface without supplying the power to a dryer first controller controlling the heat exchanger and the dryer interface if a time set to the drying step passes.

The duct may include an exhaust duct through which the air of the drying duct is discharged, a supply duct supplying the air to the drying duct and a connection duct connecting the exhaust duct with the supply duct, and the heat exchanger may be provided to include a heat absorption unit dehumidifying the air discharged from the drying drum, a heat emission unit heating the air that has passed through the heat absorption unit, and a refrigerant pipe and a compressor circulating the refrigerant between the heat absorption unit and the heat emission unit, and the low power mode execution step may be provided to control the compressor to lower flow velocity of the refrigerant.

The control method may further comprise a heating ending notification step of notifying the dryer of ending of the heating step by the washing machine, and may control the compressor to enhance flow velocity of the refrigerant if ending of the heating step is notified.

The control method may execute the low power mode execution step if a temperature of the refrigerant, which is periodically measured until the request step is completed after the drying step is initiated, exceeds a second reference temperature set to be higher than the first reference temperature at least once.

The control method may execute the maintenance step if the temperature of the refrigerant, which is periodically measured until the request step is completed after the drying step is initiated, does not exceed the second reference temperature.

According to the present disclosure, a laundry treating apparatus and a control method for the same may be provided, in which consumption of a standby power may be minimized.

Also, according to the present disclosure, a laundry treating apparatus and a control method for the same may be provided, in which one of two treating apparatuses capable of washing and drying laundry may control the other one.

Also, according to the present disclosure, a laundry treating apparatus and a control method for the same may be provided, in which an overcurrent may be prevented from being supplied.

It is to be understood that both the foregoing general description and the following detailed description of the present disclosure are exemplary and explanatory and are intended to provide further explanation of the disclosure as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 illustrate an example of a laundry treating apparatus;
FIGS. 2 and 3 illustrates another embodiment of a laundry treating apparatus;
FIG. 4 illustrates an example of a control panel, a washing machine driving unit, a dryer driving unit, a washing machine interface and a dryer interface, which are provided in a laundry treating apparatus;
FIG. 5 illustrates an example of a control method for a laundry treating apparatus; and
FIG. 6 illustrates another embodiment of a control method for a laundry treating apparatus.

### DETAILED DESCRIPTION OF THE INVENTION

Reference will now be made in detail to the preferred embodiments of the present disclosure, examples of which are illustrated in the accompanying drawings. Meanwhile, elements or control method of apparatuses which will be described below are only intended to describe the embodiments of the present disclosure and are not intended to restrict the scope of the present disclosure. Wherever possible, the same reference numbers will be used throughout the drawings to refer to the same or like parts.

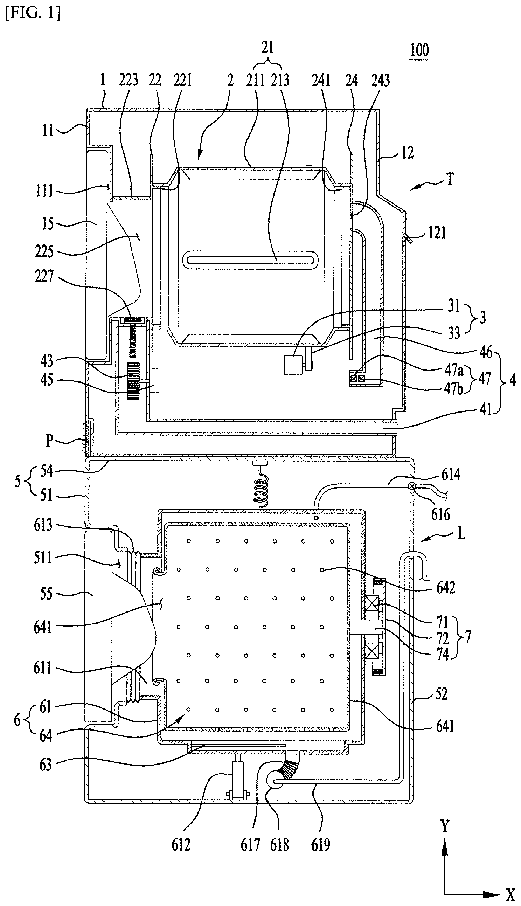

As shown in FIG. 1, a laundry treating apparatus 100 may be provided to include a dryer (first treating apparatus T) for drying laundry, and a washing machine (second treating apparatus L) provided to support a bottom surface of the dryer and therefore wash or dry laundry. Unlike the case shown in FIG. 1, the laundry treating apparatus 100 may be provided such that the dryer T may support a bottom surface of the washing machine L.

The dryer T includes a first cabinet 1, a drying drum 2 rotatably provided in the first cabinet 1, providing a space in which laundry is stored, and a supply unit 4 supplying the heated air into the drying drum 2.

The first cabinet 1 may be provided to include a front panel 11 (first front panel) forming a front surface of the dryer, a rear panel 12 (first rear panel) forming a rear surface of the dryer, an upper panel forming an upper surface of the dryer, and a base panel mounted on an upper surface of the washing machine L.

The first front panel 11 is provided with a first inlet 111 provided to be communicated with the drying drum 2, and the first inlet 111 may be provided to be opened or closed by a door 15 (first door) rotatably coupled to the first cabinet.

The drying drum 2 may be provided as a drum body 21 of a cylindrical shape of which front surface and rear surface are respectively opened. In this case, a front support 22 rotatably supporting the front surface of the drum body 211 and a rear support 24 rotatably supporting the rear surface of the drum body 211 may be provided inside the first cabinet 1.

The front support 22 may be provided to include a first fixed body fixed into the first cabinet 1, a drying drum inlet 225 provided to pass through the first fixed body, communicating the first inlet 111 with the inside of the drum body 21, and a first support body 221 provided in the first fixed body and inserted into the front surface of the drum body 21.

The first fixed body may be provided even in any shape if it may be provided with the drying drum inlet 225 and the first support body 221. The first support body 221 may be provided in a pipe shape protruded from the first fixed body toward the drum body 21.

The front support 22 may be provided to be connected to the first inlet 111 through a connecting body 223. The connecting body 223 may be provided in a cylindrical shape to surround the first inlet 111. In this case, the drying drum inlet 225 may be provided as a through hole connected to the first inlet 111 by passing through the connecting body 223.

A discharge outlet communicated with the supply unit 4 may be provided in the connecting body 223. The discharge outlet may be provided as a hole provided to pass through the connecting body 223, and a filter 227 may detachably be inserted into the discharge outlet. The air inside the drum body 21 may move to the supply unit 4 through the discharge outlet and the filter 227, and particles contained in the air in this process may be filtered by the filter 227.

The rear support 24 may be provided to include a second fixed body fixed into the first cabinet 1, and a second support body 241 provided in the second fixed body and inserted into the rear surface of the drum body 21. The rear support 24 is provided with a supply hole 243 provided to pass through the second fixed body, guiding the air supplied from the supply unit 4 to the drum body 21.

A lifter 213 for stirring of laundry may be provided on a circumferential surface of the drum body 21. The lifter 213 may be provided as a board protruded from the circumferential surface of the drum body 211 toward a rotation center of the drum body.

The drum body 21 is rotated by a drying drum driving unit 3, and the drying drum driving unit 3 may be provided to include a drying drum motor 31 fixed into the first cabinet 1, a pulley rotated by the drying drum motor, and a belt 33 connecting a circumferential surface of the pulley with the circumferential surface of the drum body 21.

The supply unit 4 may be provided to include ducts 41 and 46 and a heat exchanger 47 provided in the ducts to exchange heat with the air. The ducts may be provided to include a discharge duct 41 guiding the air discharged from the drying drum 2 to the outside of the first cabinet 1 through the discharge outlet, and a supply duct 46 supplying the air to the inside of the drying drum 2 through the supply hole 243.

The discharge duct 41 may be provided with fans 43 and 45, and the supply duct 46 may be provided with the heat exchanger 47. The heat exchanger 47 may be provided as a heater for heating the air entering the supply duct 46. FIG. 1 illustrates that the heater is provided with a first heater 47a and a second heater 47b, which may be controlled independently, as an example. The fans may be provided to include an impeller 43 rotatably provided inside the discharge duct 41, and a fan motor 45 rotating the impeller if a power is supplied thereto.

The supply duct 46 may be provided as a path of which one end is connected to the supply hole 243 and free end is arranged inside or outside the first cabinet 1. If the free end of the supply duct 46 is arranged inside the first cabinet 1, a through hole 121 may be provided in the first rear panel 12.

Although not shown, the discharge duct 41 may be provided with a temperature sensor (air temperature sensor) for measuring a temperature of the air discharged from the drying drum 2.

The washing machine L may be provided to include a second cabinet 5 provided to support a bottom surface of the first cabinet 1, and a second accommodating unit 6 provided inside the second cabinet, providing a space in which laundry is stored.

The second cabinet 5 may be provided to include a front panel 51 (second front panel) forming a front surface of the washing machine L, a rear panel 52 (second rear panel) forming a rear surface of the washing machine, and an upper panel 54 (second upper panel) forming an upper surface of the washing machine, providing a space on which the bottom surface of the first cabinet 1 is supported.

The second front panel 51 is provided with an inlet 511 (second inlet), and the second inlet 511 may be provided to be opened or closed by a door 55 (second door). The second accommodating unit 6 may be provided to include a tub 61 provided inside the second cabinet 5, providing a space in which water is stored, and a washing drum 64 rotatably provided inside the tub, storing laundry therein.

The tub 61 may be fixed to the second cabinet 5 through a tub support 612. A tub inlet 611 communicated to the second inlet 511 is provided on a front surface of the tub 61, and may be connected to the second inlet 511 through a gasket 613.

The tub 61 is supplied with water through a water supply unit, and water stored in the tub 61 is discharged to the outside of the second cabinet 5 through a drainage unit.

The water supply unit may be provided to include a water supply pipe 614 connecting a water supply source with the tub 61, and a water supply valve 616 controlling switching of the water supply pipe. The drainage unit may be provided to include a first drainage pipe 617 guiding water inside the tub 61 to the drainage pump 618, and a second drainage pipe 619 guiding water discharged from the drainage pump 618 to the outside of the second cabinet 5.

The tub 61 may be provided with a heating unit 63 for heating the water supplied through the water supply source. The heating unit 63 may be provided in a heater chamber formed by a groove formed as a bottom surface of the tub 61 is bent to be concave toward the bottom surface of the second cabinet.

The washing drum 64 may be provided in a hollow cylindrical shape. A washing drum inlet 641 communicated with the second inlet 511 through the tub inlet 611 may be provided on the front surface of the washing drum, and a drum through hole 642 communicating the inside of the washing drum with the inside of the tub may be provided on the circumferential surface and the rear surface of the washing drum.

The washing drum 64 may be rotated by a washing drum driving unit 7 (washing drum motor). The washing drum driving unit 7 may be provided to include a stator 71 fixed to the rear surface of the tub 61, forming a rotating magnetic field, a rotor 72 rotated by the rotating magnetic field, and a rotary shaft 74 connecting the rotor 72 with the rear surface of the washing drum 64 by passing through the rear surface of the tub.

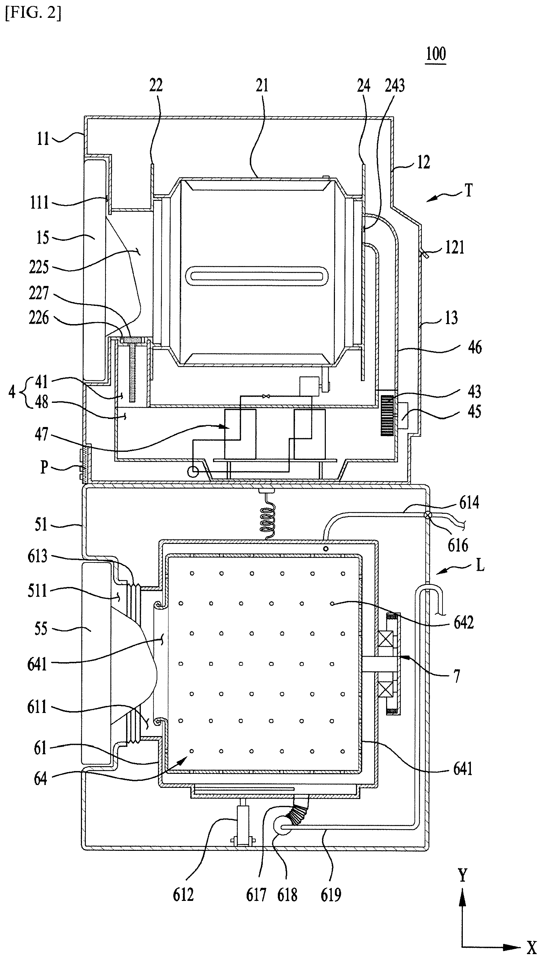

FIG. 2 illustrates another embodiment of the laundry treating apparatus 100, and the laundry treating apparatus according to this embodiment is also provided to include a dryer T and a washing machine L. The laundry treating apparatus provided in this embodiment may be provided in the same structure as that of the laundry treating apparatus shown in FIG. 1 except the structure of the supply unit 4 provided in the dryer.

The supply unit 4 according to this embodiment may be provided to include ducts 41, 46 and 48 forming a path for re-supplying the air discharged from the drum body 21 to the drum body 21, and a heat exchanger 47 dehumidifying and heating the air entering the ducts.

The ducts may be provided to include a discharge duct 41 connected to the discharge outlet, a supply duct 46 connected to the supply hole 243, and a connection duct 48 connecting the discharge duct with the supply duct. In this case, the impeller 43 of the fan may be provided inside the connection duct 48.

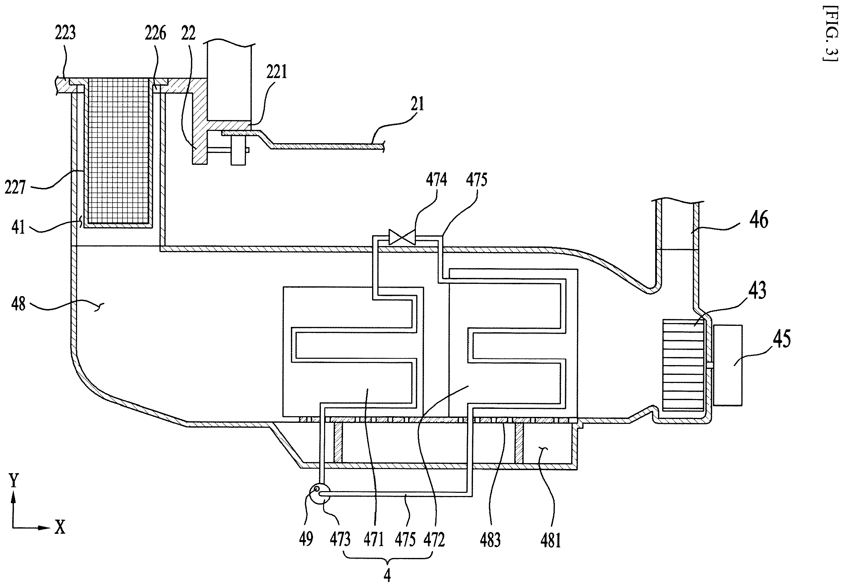

As shown in FIG. 3, the heat exchanger 47 includes a first heat exchanger 471 (heat absorption unit) removing water from the air entering the connection duct 48, and a second heat exchanger 472 (heat emission unit) provided inside the connection duct 48, heating the air passing through the first heat exchanger 471. The heat absorption unit 471 and the heat emission unit 472 are sequentially disposed along a moving direction of the air and connected with each other through a refrigerant pipe 475 that forms a circulating path of a refrigerant.

The refrigerant moves along the refrigerant pipe 475 by means of a compressor 473 arranged outside the ducts 41, 46 and 48, and the refrigerant pipe 475 is provided with a pressure controller 474 for controlling a pressure of the refrigerant that has passed through the heat emission unit 472.

The supply unit may further be provided with a temperature sensor 49 (refrigerant temperature sensor) for measuring a temperature of the refrigerant circulating along the refrigerant pipe 475. The temperature sensor 49 may be provided to measure a temperature of the refrigerant entering the inside of the compressor 473 or a temperature of the refrigerant discharged from the compressor.

The heat absorption unit 471 is a means for cooling the air and evaporating the refrigerant by delivering heat of the air entering the discharge duct 41 to the refrigerant. The heat emission unit 472 is a means for heating the air and condensing the refrigerant by delivering heat owned by the refrigerant that has passed through the compressor 473 to the air. In this case, water contained in the air will be collected in the bottom surface of the connection duct 48 along the surface of the heat absorption unit 471 when passing through the heat absorption unit 471.

In order to collect water removed from the air passing through the heat absorption unit 471, the dryer T is provided with a water collecting body 481. The water collecting body 481 may be provided anywhere in the laundry treating apparatus, which can store water discharged from the heat absorption unit, and FIG. 3 illustrates that the water collecting body 481 is provided to be communicated with the bottom surface of the connection duct 48, as an example.

A heat exchanger support 483 may further be provided in the water collecting body 481 such that the heat absorption unit 471 and the heat emission unit 472 are not in contact with the water (condensed water) stored in the water collecting body 481.

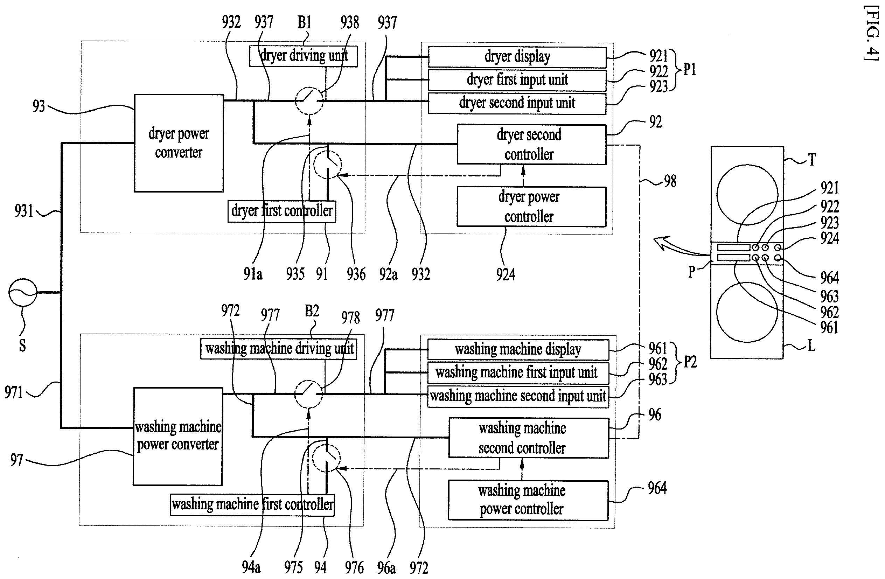

The aforementioned laundry treating apparatus 100 should be provided with an input unit and a display unit, which are required for control of each of the apparatuses T and L. That is, as shown in FIG. 4, the dryer T is provided with a dryer interface P1, and the washing machine is provided with a washing machine interface P2.

The dryer interface P1 may be provided to include a dryer display 921 and dryer input units 922 and 923, and the washing machine interface P2 may be provided to include a washing machine display 961 and washing machine input units 962 and 963.

The dryer display 921 is a means for displaying a control command capable of being input to the dryer T or a control command input to the dryer T, and the dryer input units 922 and 923 are means for inputting the control command to the dryer T. Likewise, the washing machine display 961 is a means for displaying a control command capable of being input to the washing machine L or a control command input to the washing machine L, and the washing machine input units 962 and 963 are means for inputting the control command to the washing machine L.

In order to form unity in design of the laundry treating apparatus 100 in which two treating apparatuses are arranged up and down, the dryer display 921, the dryer input units 922 and 923, the washing machine display 961 and the washing machine input units 962 and 963 may be provided in one control panel P.

The control panel P may be provided such that an upper surface is fixed to the front surface (the first front panel) of the dryer and a lower surface is fixed to the front surface (the second front panel) of the washing machine. In this case, the control panel P will serve as a fastening unit for fixing the dryer T to the washing machine L (serve to fasten the first front panel with the second front panel).

Unlike the aforementioned description, the control panel P may be provided to be fixed to any one of the first front panel 11 and the second front panel 51. FIGS. 1 and 2 show that the control panel P is fixed to a lower end of the first front panel 11, as an example. That is, a panel accommodating groove formed as the surface of the first front panel is bent to be concave is provided on the lower end of the first front panel 11, and the control panel P may be fixed to the panel accommodating groove. In this case, the control panel P will form the front surface of the dryer together with the first front panel 11.

The dryer display 921 and the dryer input units 922 and 923 are controlled by a second controller 92 provided in the dryer, and the washing machine display 961 and the washing machine input units 962 and 963 are controlled by a second display controller 96 provided in the washing machine. The case that the second controller controls the display and the input units means that the second controller and each apparatus are provided to transmit and receive a control command (or control signal) to and from each other. The second controller 92 of the dryer and the second controller 96 of the washing machine may be provided to be communicated with each other through a communication circuit 98.

The dryer input unit may be provided to include a dryer first input unit 922 and a dryer second input unit 923. The dryer first input unit 922 may be provided as a means for selecting any one of control commands (drying courses) that can be executed by the dryer, and the dryer second input unit 923 may be provided as a means for executing the selected control command or inputting a control command requesting a temporary stop of the control command which is being executed.

The washing machine input unit may be provided to include a washing machine first input unit 962 and a washing machine second input unit 963. The washing machine first input unit 962 may be provided as a means for selecting any one of control commands (washing courses) that can be executed by the washing machine, and the washing machine second input unit 963 may be provided as a means for executing the selected control command or inputting a control command requesting a temporary stop of the control command which is being executed.

Load of the dryer is classified into driving load and interface load, wherein the driving load (dryer driving load) is a dryer driving unit B1 comprised of the drying drum motor 31, the fan motor 45, the heat exchanger 47, and the temperature sensor 411, and the interface load (dryer interface load) is a dryer interface P1 comprised of the dryer display 921 and the dryer input units 922 and 923.

A power of the dryer load B1 and P1 may be provided to be controlled by a dryer first controller 91. However, the operation of the dryer driving unit B1 may be controlled by the dryer first controller 91 and the operation of the dryer interface P1 may be controlled by the dryer second controller 92.

The dryer T is connected to a power source S through a first power line 931, and may be provided such that an alternating current power supplied to the first power line 931 is converted to a direct current power through a first converter 93 (dryer power converter). In this case, the dryer second controller 92 may be provided to be supplied with a power through a dryer first power circuit 932 connected to the first converter 93, the dryer first controller 91 may be provided to be supplied with a power through a dryer second power circuit 935, and the dryer driving unit B1 and the dryer interface P1 may be provided to be supplied with a power through a dryer third power circuit 937.

The dryer second power circuit 935 may be provided with a dryer first switch 936, and the dryer third power circuit 937 may be provided with a dryer second switch 938. The dryer first switch 936 may be provided to open or close the dryer second power circuit 935 in accordance with a control command of the dryer second controller 92 or a control command of the dryer power controller 924. The dryer power controller 924 may be provided in the control panel P and provided as a means for controlling power supply to the dryer driving unit B1 and the dryer interface P1.

If the dryer power controller 924 transmits a control command requesting power supply to the dryer second controller 92 (if a user inputs a power supply request signal through the dryer power controller), the dryer second controller 92 controls the dryer first switch 936 to close the dryer second power circuit 935 through the dryer first switch control circuit 92a. If the dryer first switch 936 closes the dryer second power circuit 935, the dryer first controller 936 may be supplied with a power.

Meanwhile, the dryer second switch 938 may be provided to open or close the dryer third power circuit 937 in accordance with the control command transmitted from the dryer first controller 91 through the second switch control circuit 91a, or may be provided to open or close the dryer third power circuit 937 in accordance with the control command transmitted from the dryer second controller 92. The dryer driving unit B1 and the dryer interface P1 may be supplied with a power when the dryer second switch 938 closes the dryer third power circuit 937.

The dryer second controller 92 and the dryer power controller 924 are always connected with a power source through the dryer first power circuit 932. However, the dryer driving unit B1 and the dryer interface P1 will be supplied with a power when a user inputs a control command to the dryer power controller 924 or when the dryer second controller 92 receives a control command from the washing machine second controller 96.

Since the dryer T of the aforementioned structure supplies a power to only the dryer second controller 92 and the dryer power controller 924 when the dryer driving unit and the interfaces B1 and P1 are not operated, consumption of a standby power may be minimized.

Load of the washing machine L is classified into driving load and interface load, wherein the driving load of the washing machine is a washing machine driving unit B2 comprised of the washing drum driving unit 7, a water supply valve 616, a drainage pump 618, and a heating unit 63, and the interface load of the washing machine is a washing machine interface P2 comprised of the washing machine display 961 and the washing machine input units 962 and 963.

A power of the washing machine load B2 and P2 may be provided to be controlled by a washing machine first controller 94. The operation of the washing machine driving unit B2 may be controlled by the washing machine first controller 94 and the operation of the washing machine interface P2 may be controlled by the washing machine second controller 96.

The washing machine L is connected to the power source S through a second power line 971, and may be provided such that an alternating current power supplied to the second power line 971 is converted to a direct current power through a second converter 97 (washing machine converter). The power line 931 of the dryer T and the power line 971 of the washing machine L are provided separately (independently) from each other, whereby even though any one of the two power lines is damaged or any one of the two apparatuses is out of order, the other one may be operated.

The washing machine second controller 96 may be provided to be supplied with a power through a washing machine first power circuit 972 connected to the second converter 97, the washing machine first controller 94 may be provided to be supplied with a power through a washing machine second power circuit 975, and the loads B2 and P2 of the washing machine may be provided to be supplied with a power through a washing machine third power circuit 977.

The washing machine second power circuit 975 may be provided with a washing machine first switch 976, and the washing machine first switch 976 may be provided to open or close the washing machine second power circuit 975 in accordance with the control command of the washing machine second controller 96 or the control command of the washing machine power controller 964. The washing machine power controller 964 may be provided in the control panel Pl and thus may be provided as a means for controlling power supply to the washing machine driving unit B2 and the washing machine interface P2.

If the washing machine power controller 964 transmits a control command requesting power supply to the washing machine second controller 96 (if a user inputs a power supply request signal through the washing machine power controller), the washing machine second controller 96 controls the washing machine first switch 976 to close the washing machine second power circuit 975 through the washing machine first switch control circuit 96a. If the washing machine first switch 976 closes the washing machine second power circuit 975, the washing machine first controller 94 will be supplied with a power.

Meanwhile, the washing machine second switch 978 may be provided to open or close the washing machine third power circuit 977 in accordance with the control signal transmitted from the washing machine first controller 94 through the washing machine second switch control circuit 94a, or may be provided to open or close the washing machine third power circuit 977 in accordance with the control command transmitted from the washing machine second controller 96. The washing machine driving unit B2 and the washing machine interface P2 will be supplied with a power when the washing machine second switch 978 closes the washing machine third power circuit 977.

The washing machine second controller 96 and the washing machine power controller 964 are always connected with a power source through the washing machine first power circuit 972. However, the washing machine driving unit B2 and the washing machine interface P2 will be supplied with a power when a user inputs a control command to the washing machine power controller 964 or when the washing machine second controller 96 receives a control command from the dryer first controller 92.

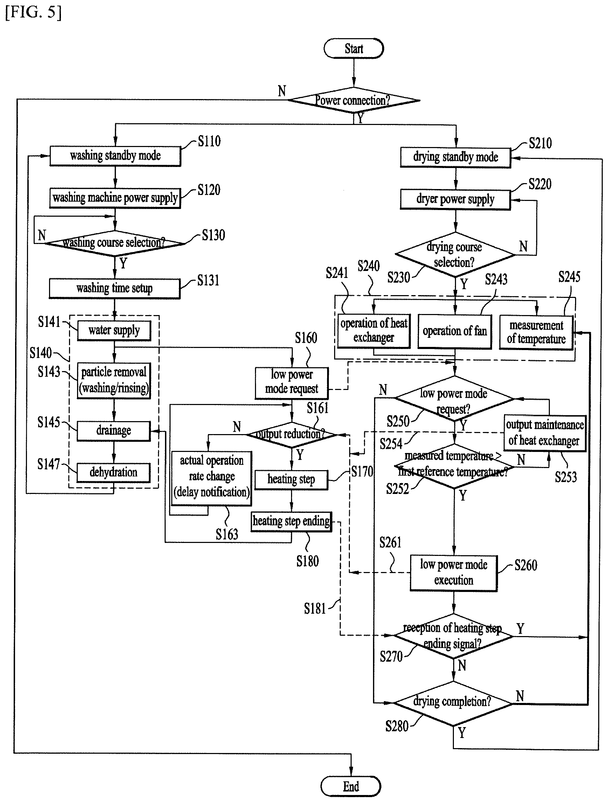

FIG. 5 illustrates an example of a control method for the aforementioned laundry treating apparatus 100.

As shown, if the first power line 931 and the second power line 971 are respectively connected to the power source S, the laundry treating apparatus 100 proceeds to a washing standby mode step S110 and a drying standby mode step S210.

The washing standby mode step S 110 is the step of supplying a power to the washing machine second controller 96 and the washing machine power controller 964 without supplying the power to the washing machine driving unit B2, the washing machine interface P2 and the washing machine first controller 94. That is, at the washing standby mode step S110, the washing machine first switch 976 maintains the state that the washing machine second power circuit 975 is opened, and the washing machine second switch 978 maintains the state that the washing machine third power circuit 977 is opened.

The washing machine power controller 964 may be provided as a switch that may operate the washing machine first switch 976 even though a power is not supplied thereto. In this case, the washing standby mode step S 110 will be the step of supplying a power to the washing machine second controller without supplying the power to the washing machine driving unit, the washing machine interface and the washing machine first controller.

The drying standby mode step S210 is the step of supplying a power to the dryer second controller 92 and the dryer power controller 924 without supplying the power to the dryer driving unit B1, the dryer interface P1 and the dryer first controller 91. That is, at the drying standby mode step S210, the dryer first switch 936 maintains the state that the dryer second power circuit 935 is opened, and the dryer second switch 938 maintains the state that the dryer third power circuit 937 is opened.

The dryer power controller 924 may be provided as a switch that may operate the dryer first switch 936 even though a power is not supplied thereto. In this case, the drying standby mode step S210 will be the step of supplying a power to the dryer second controller without supplying the power to the dryer driving unit, the dryer interface and the dryer first controller.

If a control command requesting power supply is input to the washing machine load through the washing machine power controller 964 in the middle of the washing machine standby mode step S110, a washing machine power supply step S120 is executed. The washing machine power supply step S120 is the step of supplying a power to the washing machine first controller 94, the washing machine driving unit B2 and the washing machine interface P2.

If the washing machine power supply step S120 is completed, the control method determines whether a washing course has been input to the washing machine interface P2 (S130). If a selection command of the washing course is input through the washing machine first input unit 962 and a start command of the selected washing course is input through the washing machine second input unit 963, the control method proceeds to a step S131 of setting a washing time and a washing step S140 of executing the washing course for a washing time set by the washing machine driving unit B2.

The step S131 of setting the washing time may be provided to include a step of determining the amount of laundry, a step of determining a washing time in accordance with the measured amount of laundry, and a display step of displaying the determined washing time on the washing machine display 961.

The step of determining the amount of laundry may be provided as a step of measuring the amount of a current supplied to the stator 71 to rotate the washing drum at a preset reference angle, the step of determining the washing time may be provided as a step of selecting time data set to the measured amount of laundry among time data prepared through an experiment as the washing time, and the display step may be provided as a step of displaying the selected time data on a washing machine display.

The washing step S140 may be executed for a time set at the washing time setup step S131, and may be provided to include a water supply stroke S141 of supplying water to the tub 61, a particle removal stroke S143 of separating particles from laundry (washing target) by rotating the washing drum 64, a drainage stroke of discharging the water stored in the tub to the outside of the second cabinet 2, and a dehydrating stroke S147 of separating water and particles from laundry by rotating the washing drum 64.

The water supply stroke S141 may be provided as a step of supplying water of a preset amount to the tub 61 by controlling the water supply valve 616 by the washing machine first controller 94, and the particle removal stroke S143 may be provided as a step of alternately executing clockwise rotation and counterclockwise rotation of the washing drum 64 by the washing drum driving unit 7. The water supplied by the water supply stroke S 141 may be set to be increased in proportion to the amount of laundry measured at the step of determining the amount of laundry.

The drainage stroke S145 may be provided as a step of discharging the water stored in the tub 61 to the outside of the tub by the drainage pump 618, and the dehydrating stroke S146 may be provided as a step of rotating the washing drum 64 clockwise or counterclockwise by the washing drum driving unit 7 (step of rotating the washing drum at the number of revolutions higher than that set at the particle removal stroke).

If a control command requesting the dryer load of power supply is input through the dryer power controller 924 in the middle of the drying standby mode S210, a dryer power supply step S220 is executed. The dryer power supply step S220 is the step of supplying a power to the dryer first controller 91, the dryer driving unit B1 and the dryer interface P1.

After the dryer power supply step S220 is completed, the control method determines whether a drying course has been input to the dryer interface P1 (S230). If a selection command of the drying course is input through the dryer first input unit 922 and a start command of the selected drying course is input through the dryer second input unit 923, the control method proceeds to a drying step S240 of executing the drying course by the dryer driving unit B1. Therefore, the drying step S240 may be executed simultaneously with the washing step 5140 in accordance with a user's selection.

The drying step S240 may be provided to include a supply stroke S243 of supplying the fan motor 45 by the dryer first controller 91, and a heat exchange stroke S241 of heating the air supplied to the drying drum 2 by operating the heat exchanger 47.

The control method may execute a measuring step S245 of periodically measuring a temperature of the air discharged from the drying drum in the middle of the drying step S240. The measuring step S245 may be executed through the temperature sensor (air temperature sensor) provided in the discharge duct 41.

In order to easily separate particles from laundry (in order to enhance a washing power and in order to shorten a washing time), the control method of FIG. 5 may execute a heating step S170 of heating the water stored in the tub 61 in the middle of the washing step S140. Therefore, in the laundry treating apparatus 100, the washing step S140, the heating step S 170 and the drying step S240 may be executed at the same time.

If the heating step S170 and the drying step S240 are executed at the same time, a risk may occur in that an overcurrent may be supplied to the laundry treating apparatus 100. In order to minimize a risk that the amount of a current per hour supplied to the laundry treating apparatus 100 exceeds a reference current amount, the control method may execute a request step S160 (low power mode request step) before the heating step S170 is initiated.

The request step S160 may be provided as a step of transmitting a control command (low power mode request signal) requesting reduction of the amount of a current per hour supplied to the heat exchanger 47 to the dryer second controller 92 by the washing machine second controller 96.

The dryer second controller 92 determines whether the low power mode request signal is periodically transmitted through the communication circuit 98 while the drying step S240 is being executed.

If the low power mode request signal is not received (S250) in the middle of the drying step S240, the drying step S240 maintains the heat exchange stroke S241 and the supply stroke S243 until a condition (drying time/drying level) set to the drying course is achieved (S280).

However, if the low power mode request signal is received (S250) in the middle of the drying step S240, the control method determines whether the temperature of the air discharged from the drying drum 2 is higher than a preset first reference temperature (S252).

If the temperature of the air discharged from the drying drum 2 is lower than the preset first reference temperature, the control method executes a maintenance step S253 of maintaining a current amount per hour supplied for the heat exchange stroke S241.

If the maintenance step S253 is initiated, the control method executes a first notification step S254 (maintenance step initiation notification step). The first notification step S254 may be provided as a step of allowing the dryer second controller 92 to transmit a control command requesting delay of the heating step S170 to the washing machine second controller 96.

If the signal requesting delay of the heating step is received through the first notification step S254 (S161), the washing machine first controller 94 may execute an adjustment step S163 of reducing the current amount per hour supplied to the washing drum driving unit 7. A method for reducing the current amount supplied to the washing drum driving unit 7 may be implemented in various ways, and its example may include lowering an actual driving rate of the washing drum driving unit 7.

Moreover, if the adjustment step S163 is initiated, the control method may be provided to execute a delay notification step of notifying a user that a washing time has been more increased than the time set at the washing time setup step S131, through the washing machine display 961.

Meanwhile, if the temperature of the air discharged from the drying drum 2 is higher than the first reference temperature (S252), the control method executes a low power mode execution step S260 of controlling a current amount per hour supplied for the heat exchange stroke S241.

If the heat exchanger is provided with a plurality of heaters provided in the supply duct 46, the low power mode execution step S260 may be provided as a step of supplying a power to only some of the plurality of heaters. That is, as shown in FIG. 1, if the heat exchanger is provided with a first heater 47a and a second heater 47b, the low power mode execution step S260 may be provided as a step of supplying a power to the first heater without supplying the power to the second heater.

Meanwhile, if a heater to which a power is supplied and a heater to which a power is not supplied are fixed at the low power mode execution step S260, durability of the heater to which a power is supplied at the low power mode execution step may be deteriorated more quickly than durability of the heater to which a power is not supplied. Therefore, the low power mode execution step S260 may be provided to exchange the heater to which a power is supplied with the heater to which a power is not supplied, if a preset reference time passes. That is, the low power mode execution step S260 may be provided to block power supply to the first heater and supply a power to the second heater if the reference time passes after the low power mode execution step is initiated.

After the low power mode execution step S260 is executed, the dryer second controller 92 executes a second notification step S261 (lower power mode initiation notification step) of notifying the washing machine second controller 96 of execution of a low power mode, and the heating step S170 is initiated if the second notification step S261 is completed.

The heating step S170 may be provided with only a stroke (heating stroke) of heating the water inside the tub 61 to reach a target temperature by supplying a power to the heating unit 63 provided inside the tub 61, or may be provided to include the heating stroke and a maintenance stroke (stroke of maintaining a temperature of water at a target temperature).

If the heating step S170 is provided with only a heating stroke, the heating step S170 ends when the temperature of water reaches the target temperature (S180). However, if the heating step S170 is provided to include a heating stroke and a maintenance stroke, the heating step S170 may be set to end when a preset heating time passes, or may be set to end when the particle removal step S143 ends.

The drainage stroke S145 provided as the washing step S140 may be initiated after the heating step ends (S180), and after the drainage stroke S145 and the dehydrating stroke S147 end, the washing machine L resumes the aforementioned washing standby mode step S110.

Meanwhile, if the heating step ends (S180), the washing machine second controller 96 executes a heating end notification step S181 of notifying the dryer second controller 92 of ending of the heating step S170.

If the time (drying time) set to the drying course passes in the middle of the drying step (drying step executed in a low power mode) which is reset, the dryer T resumes the aforementioned drying standby mode step S210.

However, if the dryer second controller 92 receives an ending signal of the heating step in the middle of the drying step S240 in the low power mode (S270), the drying step S240 ends the low power mode. The case that the low power mode ends means that a current amount supplied to the heat exchange stroke S241 of the low power mode is changed to a current amount set to the heat exchange stroke S241 prior to the low power mode.

That is, if the drying step S240 of the low power mode is the step of executing the supply stroke S243 and the heat exchange stroke S241 of supplying a power to any one of the heaters 47a and 47b, the drying step S240 will be changed to a normal mode of executing the supply stroke S243 and the heat exchange stroke S241 of supplying a current to each of the heaters 47a and 47b when the low power mode ends.

If the execution time (low power mode execution time + normal mode execution time) of the drying step S240 reaches the time set to the drying course, the dryer T ends the drying step and then resumes the aforementioned drying standby mode step S210.

The aforementioned control method of FIG. 5 may be applied to even a case that the heat exchanger 47 is provided as a heat pump that includes the heat absorption unit 471, the heat emission unit 472, the compressor 473 and the pressure controller 474.

If the heat exchanger 47 is provided as a heat pump, the low power mode execution step S260 may be provided with a step of lowering flow velocity of the refrigerant by lowering the output of the compressor 473. In this case, the low power mode may be defined as the supply stroke S243 and the heat exchange stroke S241 of increasing a circulating cycle of the refrigerant.

If the compressor 473 has a structure for moving the refrigerant by using a centrifugal force of an impeller, etc., its output may be lowered by lowering the number of revolutions of the impeller. If the compressor 473 has a structure for compressing the refrigerant by using a piston that linearly reciprocates, its output may be lowered by lowering a reciprocating period of the piston.

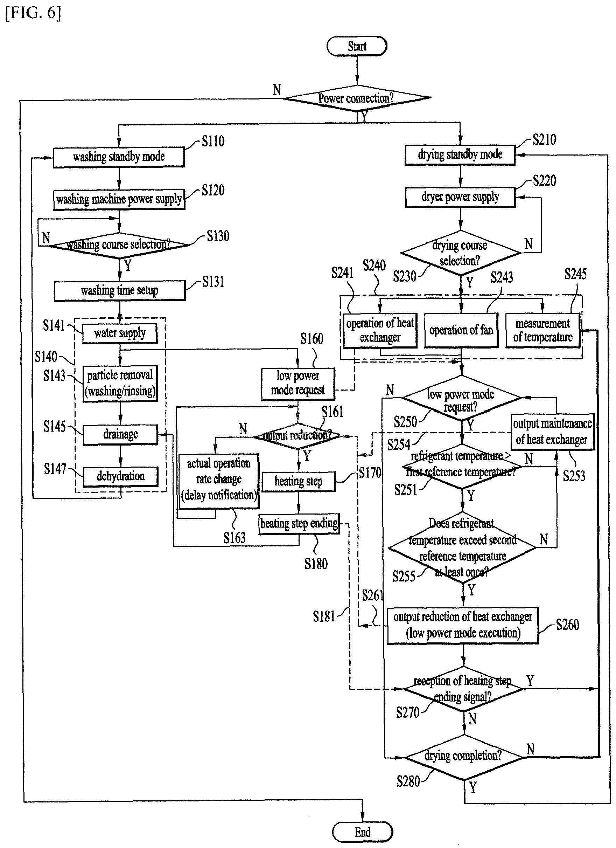

FIG. 6 illustrates another embodiment of a control method for a laundry treating apparatus in which the heat exchanger 47 is provided as a heat pump, and a measuring step S245 of FIG. 6 may be provided as a step of measuring a temperature of a refrigerant by a temperature sensor 49 provided in the compressor 473.

In the control method according to this embodiment, if the low power mode request signal is received (S250), the dryer second controller 92 determines whether the temperature of the refrigerant is higher than a first reference temperature (refrigerant reference temperature) (S251). If the temperature of the refrigerant is lower than the first reference temperature, the control method according to this embodiment executes the maintenance step S253 of maintaining the output (the output of the compressor) of the heat exchanger 47.

The control method of FIG. 6 executes the first notification step S254 (maintenance step initiation notification step) after the maintenance step S253 is executed. The first notification step S254 may be provided as a step of transmitting a control command requesting delay of the heating step S170 to the washing machine second controller 96 by the dryer second controller 92.

If the delay request signal of the heating step is received through the first notification step S254, the washing machine first controller 94 may execute an adjustment step S163 of reducing the current amount per hour supplied to the washing drum driving unit 7 and the delay notification step. The adjustment step and the delay notification step have been described in the embodiment of FIG. 5 and therefore their detailed description will be omitted.

Meanwhile, if the temperature of the refrigerant, which is measured at the measuring step S245, is higher the first reference temperature, the control method according to this embodiment executes the low power mode execution step S260 of reducing the output of the heat exchanger 47. The low power mode execution step S260 may be provided with a step (step of reducing flow velocity of the refrigerant) of lowering the output of the compressor 473 such that the drying step S240 is executed in a low power mode.

After the low power mode execution step S260 is initiated, the dryer second controller 92 executes a second notification step S261 of allowing the dryer second controller 92 to notify the washing machine second controller 96 that the low power mode has been executed, and the heating step S170 is preferably initiated after the second notification step S261 is completed.

The low power mode execution step S260 may be provided to be executed only if the temperature of the refrigerant exceeds a preset second reference temperature (set to be higher than the first reference temperature) at least once. According to an experiment, when the low power mode execution step S260 is executed after the temperature of the refrigerant discharged from the compressor exceeds the second reference temperature at least once, it is noted that higher heat exchange efficiency is obtained than would otherwise be the case.

That is, the low power mode execution step S260 may be provided to be executed only if the temperature (temperature of the refrigerant discharged from the compressor) of the refrigerant, which is periodically measured until the request step S160 is completed after the drying step S240 is initiated, is higher than the first reference temperature and exceeds the second reference temperature at least once.

Meanwhile, if the temperature of the refrigerant is higher than the first reference temperature but exceeds the second reference temperature once or less (does not exceed the second reference temperature), the control method according to this embodiment will execute the maintenance step S253.

The first reference temperature (the temperature of the air discharged from the drying drum or the temperature of the refrigerant discharged from the compressor) may be set to 65° to 75°, and the second reference temperature (the temperature of the refrigerant discharged from the compressor) may be set to 85° to 95°.

If the time (drying time) set to the drying course passes (S280) while the drying step S240 is being executed in the low power mode set through the low power mode execution step S260, the dryer T resumes the aforementioned drying standby mode step S210.

However, if the dryer second controller 92 receives the ending signal of the heating step in the middle of the low power mode drying step S240, the drying step S240 ends the low power mode. If the low power mode ends, flow velocity of the refrigerant will return to previous flow velocity before switching to the low power mode.

## Claims

1. A control method for a laundry treating apparatus (100) comprising a washing machine (L) provided with a tub (61) providing a space, in which water is stored, inside a first cabinet (1), a washing drum (64) provided inside the tub (61), providing a space in which laundry is stored, a washing drum motor (7) rotating the washing drum (64), a water supply unit supplying water to the tub (61), and a heating unit (63) heating water inside the tub (61); and a dryer (T) provided with a second cabinet (5) supporting a bottom surface of the first cabinet (1) or seated on an upper surface of the first cabinet (1), a drying drum (2) rotatably provided inside the second cabinet (5), storing laundry therein, a duct supplying the air to the drying drum (2), and a heat exchanger (47) provided in the duct, heating the air, the control method comprising:
a water supply step of supplying water to the tub (61) by controlling the water supply unit;
a drying step (S240) of supplying the heated air to the drying drum (2) through the heat exchanger (47);
a request step (S160) of transmitting a control signal requesting reduction of a current amount per hour supplied to the heat exchanger (47) to the dryer (T) by the washing machine (L);
a low power mode execution step (S260) of lowering the current amount per hour supplied to the heat exchanger (47) if a temperature of the air discharged from the drying drum (2) or a temperature of a refrigerant heat-exchanged with the air by the heat exchanger (47) is higher than a preset first reference temperature;
a heating step (S170) of heating the water stored in the tub (61) by operating the heating unit (63) after the low power mode execution step (S260) is initiated; and
a particle removal step (S143) of separating particles from laundry by rotating the washing drum (64).

2. The control method of claim 1, further comprising executing a maintenance step (S253) of maintaining the current amount per hour supplied to the heat exchanger (47) if the temperature of the air discharged from the drying drum (2) or the temperature of the refrigerant is the first reference temperature or less.

3. The control method of claim 2, further comprising an adjustment step (S163) of reducing a current amount per hour supplied to the washing drum motor (7) in the middle of the maintenance step (S253).

4. The control method of claim 3, further comprising a delay notification step of notifying a user of increase of a washing time through a washing machine interface (P2) if the adjustment step (S163) is initiated.

5. The control method of any one of claims 1 to 4, further comprising a notification step of notifying the washing machine (L) of initiation of the low power mode execution step (S260) by the dryer (T), wherein the heating step (S170) is initiated after the notification step is completed.

6. The control method of any one of claims 1 to 5, wherein the duct includes a supply duct (46) guiding the air to a drying duct and an exhaust duct guiding the air of the drying drum (2) to the outside of the second cabinet (5), and the heat exchanger (47) is provided to include first and second heaters (47a, 47b) heating the air entering the supply duct (46), and
the low power mode execution step (S260) is provided to supply a current to only one of the first and second heaters (47a, 47b).

7. The control method of claim 6, further comprising a heating ending notification step of notifying the heater of ending of the heating step by the washing machine (L), wherein a current is supplied to each of the first and second heaters (47a, 47b) if ending of the heating step (S170) is notified.

8. The control method of any one of claims 1 to 7, further comprising:
a drainage step of draining the water of the tub (61) after the particle removal step ends;
a dehydrating step of removing water from laundry by rotating the washing drum (64) after the drainage step ends; and
a washing standby mode step (S110) of supplying a power to a washing machine second controller (96) controlling the washing machine interface (P2) without supplying the power to the water supply unit, the washing drum motor (7), the heating unit (63), a washing machine first controller (94) and the washing machine interface (P2) if the dehydrating step ends.

9. The control method of any one of claims 1 to 8, further comprising a drying standby mode step (S210) of supplying a power to a dryer second controller (92) controlling a dryer interface (P1) without supplying power to a dryer first controller (91) controlling the heat exchanger (47) and the dryer interface (P1) if a time set to the drying step (S240) passes.

10. The control method of any one of claims 1 to 5, wherein the duct includes an exhaust duct through which the air of the drying duct is discharged, a supply duct (46) supplying the air to the drying duct and a connection duct (48) connecting the exhaust duct with the supply duct (46), and the heat exchanger (47) is provided to include a heat absorption unit (471) dehumidifying the air discharged from the drying drum (2), a heat emission unit (472) heating the air that has passed through the heat absorption unit (471), and a refrigerant pipe (475) and a compressor (473) circulating the refrigerant between the heat absorption unit (471) and the heat emission unit (472), and
the low power mode execution step (S260) controls the compressor (473) to lower flow velocity of the refrigerant.

11. The control method of claim 10, further comprising a heating ending notification step of notifying the dryer (T) of ending of the heating step by the washing machine (L), wherein the compressor (473) is controlled to enhance flow velocity of the refrigerant if ending of the heating step is notified.

12. The control method of claim 10 or 11, wherein the low power mode execution step (S260) is executed if a temperature of the refrigerant, which is periodically measured until the request step (S160) is completed after the drying step (S240) is initiated, exceeds a second reference temperature set to be higher than the first reference temperature at least once.

13. The control method of any one of claims 10 to 12, wherein the maintenance step (S253) is executed if the temperature of the refrigerant, which is periodically measured until the request step (S160) is completed after the drying step (S240) is initiated, does not exceed the second reference temperature.

## Patentansprüche

1. Steuerungsverfahren für eine Wäschebehandlungsvorrichtung (100), die aufweist: eine Waschmaschine (L), die versehen ist mit: einer Wanne (61), die einen Raum, in dem Wasser gelagert wird, im Inneren eines ersten Kastens (1) bereitstellt, einer Waschtrommel (64), die im Inneren der Wanne (61) bereitgestellt ist, die einen Raum bereitstellt, in dem Wäsche gelagert wird, einem Waschtrommelmotor (7), der die Waschtrommel (64) dreht, einer Wasserzuführungseinheit, die Wasser an die Wanne (61) zuführt, und einer Heizeinheit (63), die Wasser im Inneren der Wanne (61) heizt; und einen Trockner (T), der versehen ist mit: einem zweiten Kasten (5), der eine untere Oberfläche des ersten Kastens (1) trägt oder auf einer oberen Oberfläche des ersten Kastens (1) sitzt, einer Trocknungstrommel (2), die drehbar im Inneren des zweiten Kastens (5) bereitgestellt ist, die Wäsche darin lagert, einem Kanal, der Luft an die Trocknungstrommel (2) zuführt, und einem Wärmetauscher (47), der in dem Kanal bereitgestellt ist und die Luft heizt, wobei das Steuerverfahren aufweist:
einen Wasserzuführungsschritt zum Zuführen von Wasser an die Wanne (61) durch Steuern der Wasserzuführungseinheit;
einen Trocknungsschritt (S240) zum Zuführen der geheizten Luft durch den Wärmetauscher (47) an die Trocknungstrommel (2);
einen Anforderungsschritt (S 160) zum Übertragen eines Steuersignals durch die Waschmaschine (L) an den Trockner (T), das eine Verringerung einer an den Wärmetauscher (47) zugeführten Strommenge pro Stunde anfordert;
einen Niederleistungsbetriebsart-Ausführungsschritt (S260) zum Senken der Strommenge pro Stunde, die an den Wärmetauscher (47) zugeführt wird, wenn eine Temperatur der von der Trocknungstrommel (2) abgegebenen Luft oder eine Temperatur eines Kältemittels, das durch den Wärmetauscher (47) mit der Luft Wärme ausgetauscht hat, höher als eine vorgegebene erste Referenztemperatur ist;
einen Heizschritt (S170) zum Heizen des in der Wanne (61) gelagerten Wassers durch Betreiben der Heizeinheit (63), nachdem der Niederleistungsbetriebsart-Ausführungsschritt (S260) eingeleitet wurde; und
einen Teilchenentfernungsschritt (S143) zum Trennen von Teilchen von der Wäsche durch Drehen der Waschtrommel (64).

2. Steuerungsverfahren nach Anspruch 1, das ferner das Ausführen eines Aufrechterhaltungsschritts (S253) zum Aufrechterhalten der an den Wärmetauscher (47) zugeführten Strommenge pro Stunde aufweist, wenn die Temperatur der von der Trocknungstrommel (2) abgegebenen Luft oder die Temperatur des Kältemittels die erste Referenztemperatur oder weniger ist.

3. Steuerungsverfahren nach Anspruch 2, das ferner einen Einstellungsschritt (S163) zum Verringern einer an den Waschtrommelmotor (7) zugeführten Strommenge pro Stunde in der Mitte des Aufrechterhaltungsschritts (S253) aufweist.

4. Steuerungsverfahren nach Anspruch 3, das ferner einen Verzögerungsbenachrichtigungsschritt zum Benachrichtigen eines Benutzers über eine Zunahme einer Waschdauer durch eine Waschmaschinenschnittstelle (P2) aufweist, wenn der Einstellungsschritt (S163) eingeleitet wird.

5. Steuerungsverfahren nach einem der Ansprüche 1 bis 4, das ferner einen Benachrichtigungsschritt zum Benachrichtigen der Waschmaschine (L) über die Einleitung des Niederleistungsbetriebsart-Ausführungsschritts (S260) durch den Trockner (T) aufweist, wobei der Heizschritt (S170) eingeleitet wird, nachdem der Benachrichtigungsschritt abgeschlossen ist.

6. Steuerungsverfahren nach einem der Ansprüche 1 bis 5, wobei der Kanal einen Zuführungskanal (46), der die Luft zu einem Trocknungskanal leitet, und einen Abluftkanal, der die Luft der Trocknungstrommel (2) nach außerhalb des zweiten Kastens (5) leitet, aufweist, und wobei der Wärmetauscher (47) derart bereitgestellt ist, dass er erste und zweite Heizungen (47a, 47b) aufweist, welche die in den Zuführungskanal (46) eintretende Luft heizen, und
wobei der Niederleistungsbetriebsart-Ausführungsschritt (S260) bereitgestellt wird, um nur an eine der ersten und zweiten Heizungen (47a, 47b) Strom zuzuführen.

7. Steuerungsverfahren nach Anspruch 6, das ferner einen Heizungsbeendigungsbenachrichtigungsschritt zum Benachrichtigen der Heizung über das Beenden des Heizungsschritts durch die Waschmaschine (L) aufweist, wobei an jede der ersten und zweiten Heizungen (47a, 47b) ein Strom zugeführt wird, wenn über das Beenden des Heizungsschritts (S170) benachrichtigt wird.

8. Steuerungsverfahren nach einem der Ansprüche 1 bis 7, das ferner aufweist:
einen Wasserabführungsschritt zum Abführen des Wassers der Wanne (61), nachdem der Teilchenentfernungsschritt endet;
einen Entwässerungsschritt zum Entfernen von Wasser aus Wäsche durch Drehen der Waschtrommel (64), nachdem der Wasserabführungsschritt endet; und
einen Waschbereitschaftsbetriebsartschritt (S110) zum Zuführen einer Leistung an eine zweite Waschmaschinensteuerung (96), welche die Waschmaschinenschnittstelle (P2) steuert, ohne die Leistung an die Wasserzuführungseinheit, den Waschtrommelmotor (7), die Heizeinheit (63), eine erste Waschmaschinensteuerung (94) und die Waschmaschinenschnittstelle (P2) zuzuführen, wenn der Entwässerungsschritt endet.

9. Steuerungsverfahren nach einem der Ansprüche 1 bis 8, das ferner einen Trocknungsbereitschaftsbetriebsartschritt (S210) zum Zuführen von Leistung an eine zweite Trocknersteuerung (92), die eine Trocknerschnittstelle (P1) steuert, aufweist, ohne Leistung an eine erste Trocknersteuerung (91), die den Wärmetauscher (47) und die Trocknerschnittstelle (P1) steuert, zuzuführen, wenn eine für den Trocknungsschritt (S240) festgelegte Zeit vergeht.

10. Steuerungsverfahren nach einem der Ansprüche 1 bis 5, wobei der Kanal einen Abluftkanal, durch den die Luft des Trocknungskanals abgeführt wird, einen Zuführungskanal (46), der Luft an den Trocknungskanal zuführt, und einen Verbindungskanal (48), der den Abluftkanal mit dem Zuführungskanal (46) verbindet, aufweist, und wobei der Wärmetauscher (47) derart bereitgestellt ist, dass er eine Wärmeabsorptionseinheit (471), welche die von der Trocknungstrommel (2) abgegebene Luft entfeuchtet, eine Wärmeemissionseinheit (472), welche die Luft, die die Wärmeabsorptionseinheit (471) durchlaufen hat, heizt, und eine Kältemittelleitung (475) und einen Kompressor (473), die das Kältemittel zwischen der Wärmeabsorptionseinheit (471) und der Wärmeemissionseinheit (472) zirkulieren, umfasst, und
wobei der Niederleistungsbetriebsart-Ausführungsschritt (S260) den Kompressor (473) derart steuert, dass er die Strömungsgeschwindigkeit des Kältemittels verringert.

11. Steuerungsverfahren nach Anspruch 10, das ferner einen Heizungsbeendigungsbenachrichtigungsschritt zum Benachrichtigen des Trockners (T) über das Beenden des Heizschritts durch die Waschmaschine (L) aufweist, wobei der Kompressor (473) gesteuert wird, um die Strömungsgeschwindigkeit des Kältemittels zu erhöhen, wenn über das Beenden des Heizschritts benachrichtigt wird.

12. Steuerungsverfahren nach Anspruch 10 oder 11, wobei der Niederleistungsbetriebsart-Ausführungsschritt (S260) ausgeführt wird, wenn eine Temperatur des Kältemittels, die regelmäßig gemessen wird, bis der Anforderungsschritt (S160) abgeschlossen ist, nachdem der Trocknungsschritt (S240) eingeleitet wurde, wenigstens einmal eine zweite Referenztemperatur überschreitet, die höher als die erste Referenztemperatur festgelegt ist.

13. Steuerungsverfahren nach einem der Ansprüche 10 bis 12, wobei der Aufrechterhaltungsschritt (S253) ausgeführt wird, wenn die Temperatur des Kältemittels, die regelmäßig gemessen wird, bis der Anforderungsschritt (S160) abgeschlossen ist, nachdem der Trocknungsschritt (S240 eingeleitet wurde, die zweite Referenztemperatur nicht überschreitet.

## Revendications

1. Procédé de commande destiné à un appareil de traitement du linge (100) comprenant une machine à laver (L) équipée d'une cuve (61) qui offre un espace, dans laquelle de l'eau est stockée, à l'intérieur d'une première enceinte (1), d'un tambour de lavage (64) prévu à l'intérieur de la cuve (61), qui offre un espace dans lequel le linge est stocké, d'un moteur de tambour de lavage (7) qui fait tourner le tambour de lavage (64), d'une unité d'alimentation en eau qui fournit de l'eau à la cuve (61), et d'une unité de chauffage (63) qui chauffe l'eau à l'intérieur de la cuve (61) ; et un séchoir (T) équipé d'une seconde enceinte (5) qui supporte une surface inférieure de la première enceinte (1) ou qui repose sur une surface supérieure de la première enceinte (1), d'un tambour de séchage (2) prévu de manière rotative à l'intérieur de la seconde enceinte (5), et qui stocke le linge à l'intérieur, d'un conduit qui fournit l'air au tambour de séchage (2), et d'un échangeur thermique (47) prévu dans le conduit, qui chauffe l'air, le procédé de commande comprenant :
une étape d'alimentation en eau qui consiste à fournir de l'eau à la cuve (61) en contrôlant l'unité d'alimentation en eau ;
une étape de séchage (S240) qui consiste à fournir l'air chauffé au tambour de séchage (2) par le biais de l'échangeur thermique (47) ;
une étape de requête (S160) qui consiste à transmettre un signal de commande qui demande une réduction d'une quantité de courant par heure fournie à l'échangeur thermique (47) au séchoir (T) par la machine à laver (L) ;
une étape d'exécution de mode à faible puissance (S260) qui consiste à réduire la quantité de courant par heure fournie à l'échangeur thermique (47) si une température de l'air évacué du tambour de séchage (2) ou une température d'un réfrigérant qui subit un échange de chaleur avec l'air par l'échangeur thermique (47) est supérieure à une première température de référence prédéfinie ;
une étape de chauffage (S170) qui consiste à chauffer l'eau stockée dans la cuve (61) en déclenchant l'unité de chauffage (63) une fois que l'étape d'exécution du mode à faible puissance (S260) a été lancée ; et
une étape d'élimination de particules (S143) qui consiste à séparer les particules du linge en faisant tourner le tambour de lavage (64).

2. Procédé de commande selon la revendication 1, comprenant en outre l'exécution d'une étape de maintien (S253) qui consiste à maintenir la quantité de courant par heure fournie à l'échangeur thermique (47) si la température de l'air évacué du tambour de séchage (2) ou la température du réfrigérant est la première température de référence ou est inférieure à celle-ci.

3. Procédé de commande selon la revendication 2, comprenant en outre une étape de réglage (S163) qui consiste à réduire une quantité de courant par heure fournie au moteur du tambour de lavage (7) au milieu de l'étape de maintien (S253).

4. Procédé de commande selon la revendication 3, comprenant en outre une étape de notification de retard qui consiste à indiquer à un utilisateur l'augmentation d'une durée de lavage par le biais d'une interface avec le machine à laver (P2) si l'étape de réglage (S163) est lancée.

5. Procédé de commande selon l'une quelconque des revendications 1 à 4, comprenant en outre une tape de notification qui consiste à indiquer à la machine à laver (L) le déclenchement de l'étape d'exécution du mode à faible puissance (S260) par le séchoir (T), dans lequel l'étape de chauffage (S170) est lancée une fois l'étape de notification terminée.

6. Procédé de commande selon l'une quelconque des revendications 1 à 5, dans lequel le conduit comprend un conduit d'alimentation (46) qui guide l'air vers un conduit de séchage et un conduit d'évacuation qui guide l'air du tambour de séchage (2) vers l'extérieur de la seconde enceinte (5), et l'échangeur thermique (47) est prévu pour inclure un premier et un second réchauffeurs (47a, 47b) qui chauffent l'air qui pénètre dans le conduit d'alimentation (46), et
l'étape d'exécution de mode à faible puissance (S260) est prévue pour fournir un courant uniquement à l'un du premier et du second réchauffeurs (47a, 47b).

7. Procédé de commande selon la revendication 6, comprenant en outre une étape de notification de fin de chauffage qui consiste à indiquer au réchauffeur la fin de l'étape de chauffage par la machine à laver (L), dans lequel un courant est fourni à chacun du premier et du second réchauffeurs (47a, 47b) si la fin de l'étape de chauffage (S 170) est notifiée.

8. Procédé de commande selon l'une quelconque des revendications 1 à 7, comprenant en outre :
une étape de vidange qui consiste à vidanger l'eau de la cuve (61) après l'étape d'élimination de particules ;
une étape de déshydratation qui consiste à éliminer l'eau du linge en faisant tourner le tambour de lavage (64) une fois l'étape de vidange terminée ; et
une étape de mode de veille de lavage (S110) qui consiste à fournir de l'énergie à un second contrôleur de machine à laver (96) qui contrôle l'interface de machine à laver (P2) sans fournir l'énergie à l'unité d'alimentation en eau, au moteur de tambour de lavage (7), à l'unité de chauffage (63), à un premier contrôleur de machine à laver (94) et à l'interface de machine à laver (P2) si l'étape de déshydratation se termine.

9. Procédé de commande selon l'une quelconque des revendications 1 à 8, comprenant en outre une étape de mode de veille de séchage (S210) qui consiste à fournir de l'énergie à un second contrôleur de séchoir (92) qui contrôle une interface de séchoir (P1) sans fournir d'énergie à un premier contrôleur de séchoir (91) qui contrôle l'échangeur thermique (47) et l'interface de séchoir (P1) si une durée définie pour l'étape de séchage (S240) est écoulée.

10. Procédé de commande selon l'une quelconque des revendications 1 à 5, dans lequel le conduit comprend un conduit d'évacuation par lequel l'air du conduit de séchage est évacué, un conduit d'alimentation (46) qui fournit l'air au conduit de séchage et un conduit de raccordement (48) qui relie le conduit d'évacuation au conduit d'alimentation (46), et l'échangeur thermique (47) est prévu pour inclure une unité d'absorption de chaleur (471) qui déshumidifie l'air évacué par le tambour de séchage (2), une unité d'émission de chaleur (472) qui chauffe l'air qui est passé par l'unité d'absorption de chaleur (471), et un tuyau de réfrigérant (475) et un compresseur (473) qui font circuler le réfrigérant entre l'unité d'absorption de chaleur (471) et l'unité d'émission de chaleur (472), et
l'étape d'exécution de mode à faible puissance (S260) contrôle le compresseur (473) afin de réduire le débit du réfrigérant.

11. Procédé de commande selon la revendication 10, comprenant en outre une étape de notification de fin de chauffage qui consiste à indiquer au séchoir (T) la fin de l'étape de chauffage par la machine à laver (L), dans lequel le compresseur (473) est contrôlé afin d'améliorer le débit du réfrigérant si la fin de l'étape de chauffage est notifiée.

12. Procédé de commande selon la revendication 10 ou 11, dans lequel l'étape d'exécution du mode à faible puissance (S260) est exécutée si une température du réfrigérant, qui est périodiquement mesurée jusqu'à ce que l'étape de requête (S160) soit terminée une fois que l'étape de séchage (S240) a été lancée, dépasse une seconde température de référence définie comme étant supérieure à la première température de référence au moins une fois.

13. Procédé de commande selon la revendication 10 à 12, dans lequel l'étape de mesure (S253) est exécutée si la température du réfrigérant, qui est périodiquement mesurée jusqu'à ce que l'étape de requête (S160) soit terminée une fois que l'étape de séchage (S240) a été lancée, ne dépasse pas la seconde température de référence.
